# EUROPEAN PATENT APPLICATION

(11) **EP 4 195 798 A1**
(43) Date of publication of application: **14.06.2023**
(21) Application number: 21854375.9
(22) Date of filing: 15.07.2021
(51) Int. Cl.: H04W 56/00, H04W 28/06, H04W 28/16, H04W 84/12

(54) **WIRELESS COMMUNICATION DEVICE AND WIRELESS COMMUNICATION METHOD**

(30) Priority: 05.08.2020 JP 2020133229
(71) Applicant: Panasonic Intellectual Property Corporation of America, Torrance, CA 90504 (US)
(72) Inventor: KANAYA, Hiroyuki, Osaka-shi, Osaka 540-6207 (JP); URABE, Yoshio, Osaka-shi, Osaka 540-6207 (JP); TAKATA, Tomofumi, Osaka-shi, Osaka 540-6207 (JP); MIURA, Taichi, Osaka-shi, Osaka 540-6207 (JP)
(74) Representative: Grünecker Patent- und Rechtsanwälte PartG mbB
(86) International application number: PCT/JP2021/026663
(87) International publication number: WO 2022/030213

(57) **Abstract**

The present invention contributes to providing a wireless communication device and a wireless communication method with which it is possible to reduce the information amount of information transmitted and received between cooperating wireless communication devices. A first wireless communication device comprises a control unit that assigns an identifier to a second wireless communication device that is not included in a basic service set to which the first wireless communication device belongs, and a transmission unit that transmits a signal including the identifier.

## Description

### Technical Field

The present disclosure relates to a radio communication apparatus and a radio communication method.

### Background Art

The technical specification of the Institute of Electrical and Electronics Engineers (IEEE) 802.11be (hereinafter, referred to as "11be") has been developed as the successor standard of 802.11ax (hereinafter, referred to as "11ax"), which is a standard of IEEE 802.11.

Discussed in 11be is application of coordinated communication in which a plurality of radio communication apparatuses on the data transmission side are coordinated to transmit data to a radio communication apparatus on the reception side.

### Citation List

### Non Patent Literature

NPL 1
   IEEE 802.11-19/0103r1, AP Coordination in EHT
NPL 2
   IEEE 802.11-19/1102r0, A unified transmission procedure for multi-AP coordination
NPL 3
   IEEE 802.11-20/1040r0, Coordinated Spatial Reuse: Extension to Uplink
NPL 4
   IEEE P802.11ax/D6.0, November 2019
NPL 5
   IEEE Std 802.11-2016, December 2016

### Summary of Invention

In coordinated communication, the amount of information transmitted and received between radio communication apparatuses in coordination with each other has not been sufficiently discussed.

One non-limiting and exemplary embodiment of the present disclosure facilitates providing a radio communication apparatus and a radio communication method each capable of reducing the amount of information transmitted and received between radio communication apparatuses in coordination.

A radio communication apparatus according to an embodiment of the present disclosure is a first radio communication apparatus and includes: a controller, which, in operation, assigns an identifier to a second radio communication apparatus not included in a basic service set to which the first radio communication apparatus belongs; and a transmitter, which, in operation, transmits a signal including the identifier.

It should be noted that general or specific embodiments may be implemented as a system, an apparatus, a method, an integrated circuit, a computer program, a storage medium, or any selective combination thereof.

According to an exemplary embodiment of the present disclosure, the amount of information transmitted and received between radio communication apparatuses in coordination can be reduced.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1A illustrates an exemplary AP and STA disposition;
FIG. 1B illustrates exemplary application of two coordination schemes;
FIG. 2 illustrates an exemplary operation of DL-DL communication;
FIG. 3 illustrates an exemplary operation of LTL-UL communication;
FIG. 4 illustrates an exemplary operation of LTL-DL communication;
FIG. 5 illustrates an exemplary format of a Common info field;
FIG. 6 illustrates an exemplary format of a User info field;
FIG. 7 is a table illustrating exemplary values of AID 12;
FIG. 8 illustrates exemplary information elements of a beacon;
FIG. 9 illustrates exemplary information elements of an association request;
FIG. 10 illustrates exemplary information elements of an association response;
FIG. 11 illustrates an exemplary format of Capability Information;
FIG. 12 illustrates an exemplary operation of RTS/CTS;
FIG. 13 illustrates an exemplary format of the frame control field of a control frame including RTS/CTS;
FIG. 14 illustrates exemplary types of MAC frame including RTS/CTS;
FIG. 15 illustrates an exemplary format ofMU-PPDU frame in 11ax;
FIG. 16Ais a block diagram illustrating an exemplary configuration of part of a radio communication apparatus;
FIG. 16B is a block diagram illustrating an exemplary radio communication apparatus according to an exemplary embodiment;
FIG. 17 illustrates an exemplary UL-DL communication coordinated by the C-SR scheme;
FIG. 18 illustrates an exemplary sequence of a UL-DL communication in the coordination set illustrated in FIG. 17;
FIG. 19 illustrates a variation of the sequence illustrated in FIG. 18;
FIG. 20 illustrates another exemplary AID12;
FIG. 21 illustrates an exemplary User Info field based on FIG. 20;
FIG. 22 illustrates an exemplary new User Info field for an AP;
FIG. 23 illustrates exemplary information elements of an AP association request;
FIG. 24 illustrates exemplary information elements of an AP association response;
FIG. 25 illustrates an exemplary sequence for UL-DL communication in Example 3;
FIG. 26 illustrates another exemplary disposition of LTL-DL communication; and
FIG. 27 illustrates a sequence for LTL-DL communication in a C-OFDMA coordination scheme.

### Description of Embodiments

Hereinafter, an embodiment(s) of the present disclosure will be described in detail with reference to the accompanying drawings.

### Exemplary Embodiment

### Coordination Scheme

Discussed in 11be is application of, for example, Multi-AP coordination (hereinafter, referred to as "coordinated communication") in which a plurality of access points, namely radio communication apparatuses on the signal transmission side (also referred to as "base stations" and hereinafter each referred to as "AP"), transmit and receive data to and from terminals, namely radio communication apparatuses on the reception side (hereinafter, each referred to as "station (STA)").

Examples of the coordination scheme include Coordinated Orthogonal Frequency Division Multiple Access (hereinafter referred to as "C-OFDMA"), in which a plurality of APs transmit signals using different frequency bands, and Coordinated Spatial Reuse (hereinafter referred to as "C-SR"), in which a plurality of APs transmit signals using the same frequency band (see NPL 1).

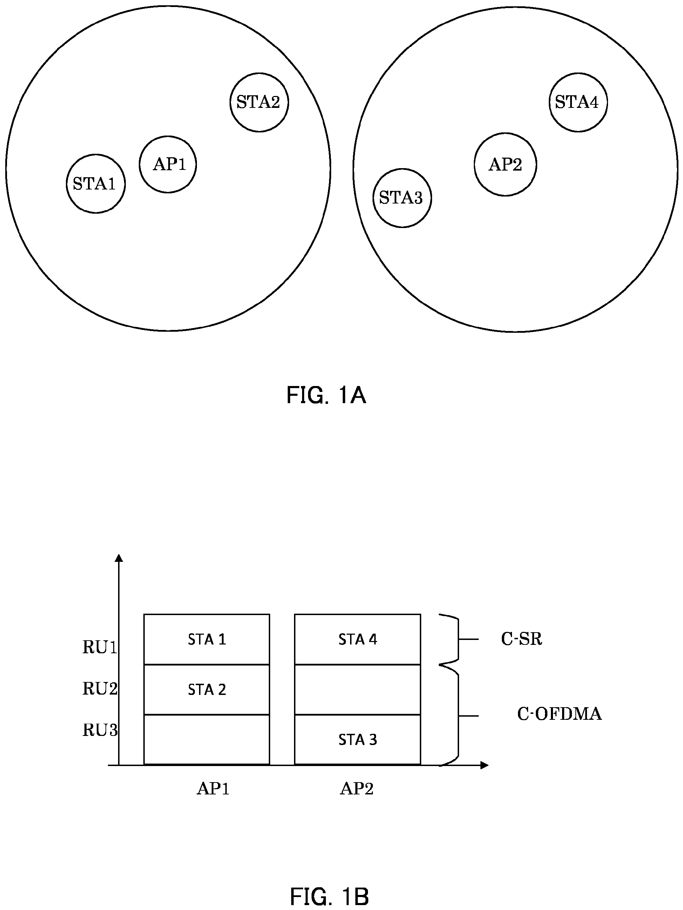

In the following, the two coordination schemes, C-OFDMA and C-SR, will be described with reference to FIGS. 1A and 1B. FIG. 1A illustrates an exemplary AP and STA disposition. FIG. 1B illustrates exemplary application of the two coordination schemes.

As illustrated in FIG. 1B, downlink (hereinafter "DL") data communication from AP1 to STA1 and DL data communication from AP2 to STA4 use the same resource unit (hereinafter "RU") 1, and is performed by using a C-SR coordination scheme. The coordinated communication, in which RU2 is used for DL data communication from AP1 to STA2, and RU3 is used for DL data communication from AP2 to STA3, is performed by using a C-OFDMA coordination scheme.

Communication forms include communication from an AP to a STA (hereinafter referred to as "DL communication") and communication from a STA to an AP (hereinafter referred to as "UL communication"). Regarding the coordinated communication forms, for example, the following is discussed (see NPL 2): a form in which two APs perform DL communication together in coordination (hereinafter referred to as "DL-DL communication"); a form in which two APs perform UL communication together in coordination (hereinafter referred to as "LTL-LTL communication"); and a form in which two APs perform UL communication and DL communication in coordination (hereinafter referred to as "LTL-DL communication").

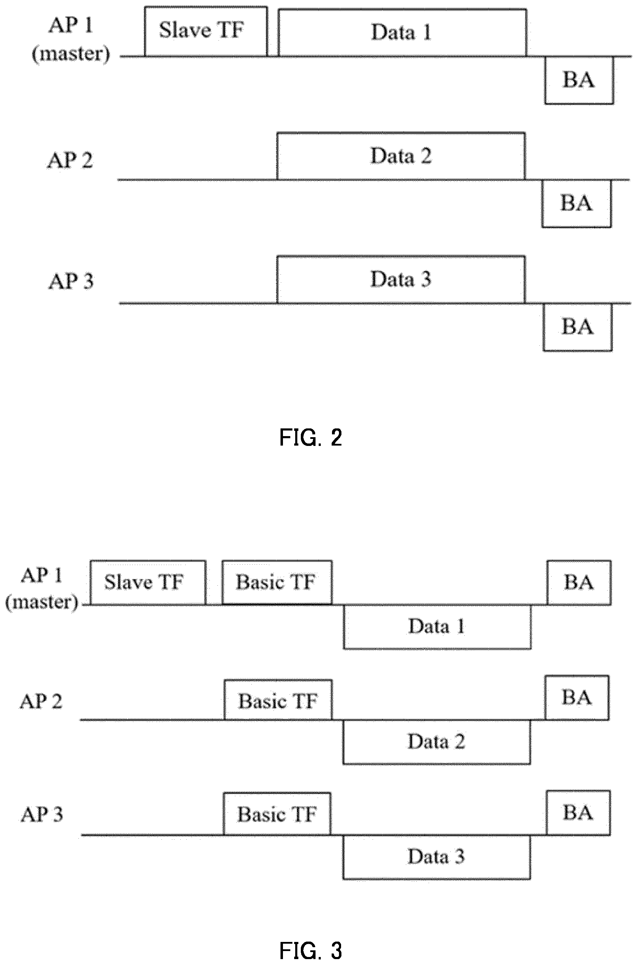

FIG. 2 illustrates an exemplary operation of the DL-DL communication. As illustrated in FIG. 2, AP1, which is a master AP, transmits a trigger frame (slave TF) to AP2 and AP3, which are slave APs. AP1, AP2, and AP3 are coordinated, and AP1, AP2, and AP3 transmit downlink data, namely Data 1, Data 2, and Data 3, respectively.

FIG. 3 illustrates an exemplary operation of the LTL-LTL communication. As illustrated in FIG. 3, AP1, which is a master AP, transmits a trigger frame (slave TF) in the same manner as in FIG. 2. AP1, AP2, and AP3 each transmit a trigger frame (Basic TF). AP1, AP2, and AP3 are coordinated, and AP1, AP2, and AP3 receive uplink data, namely Data 1, Data 2, and Data 3, respectively.

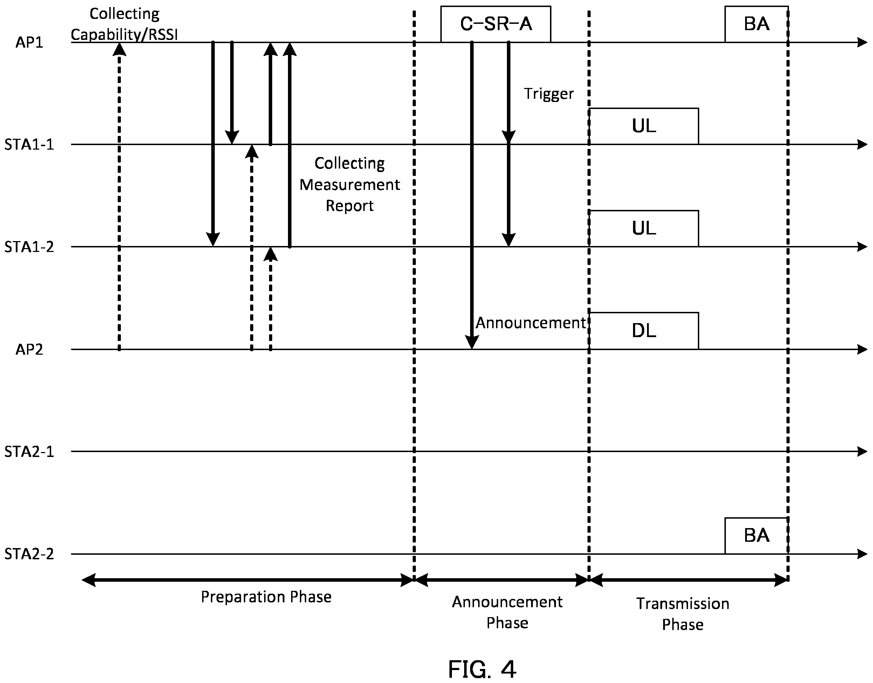

FIG. 4 illustrates an exemplary operation of the UL-DL communication. FIG. 4 exemplarily illustrates an exemplary operation with the C-SR applied (see NPL 3).

FIG. 4 illustrates the operations of AP1, AP2, STA1-1, STA1-2, STA2-1, and STA2-2. STA1-1 and STA1-2 are components of the basic service set (BSS) of AP1, and STA2-1 and STA2-2 are components of the BSS of AP2.

In "Preparation Phase" of FIG. 4, information indicating the capability of each apparatus, information indicating the received power (for example, Received Signal Strength Indicator (RSSI)) of each apparatus, and measurement report information are aggregated.

In "Announcement Phase" of FIG. 4, AP1 transmits C-SR-A.

In "Transmission Phase" of FIG. 4, data is transmitted and received. For example, STA1-1, STA1-2, and AP2 are in coordination in FIG. 4. STA1-1 and STA1-2 perform LTL transmission to AP1, and AP2 performs DL transmission to STA2-2.

In the form of each coordinated communication as in the above example, a frame (trigger) for indicating transmission control information and transmission timing is transmitted and received. For example, slave TF in FIG. 2, Basic TF in FIG. 3, and C-SR-A in FIG. 4 are trigger frames.

The trigger of UL communication (hereinafter referred to as "UL trigger frame") in 11ax is formed as a field (hereinafter referred to as "Common info field") including common information addressed to the STAs to be triggered and a field (hereinafter referred to as "User info field") including information addressed to individual STAs.

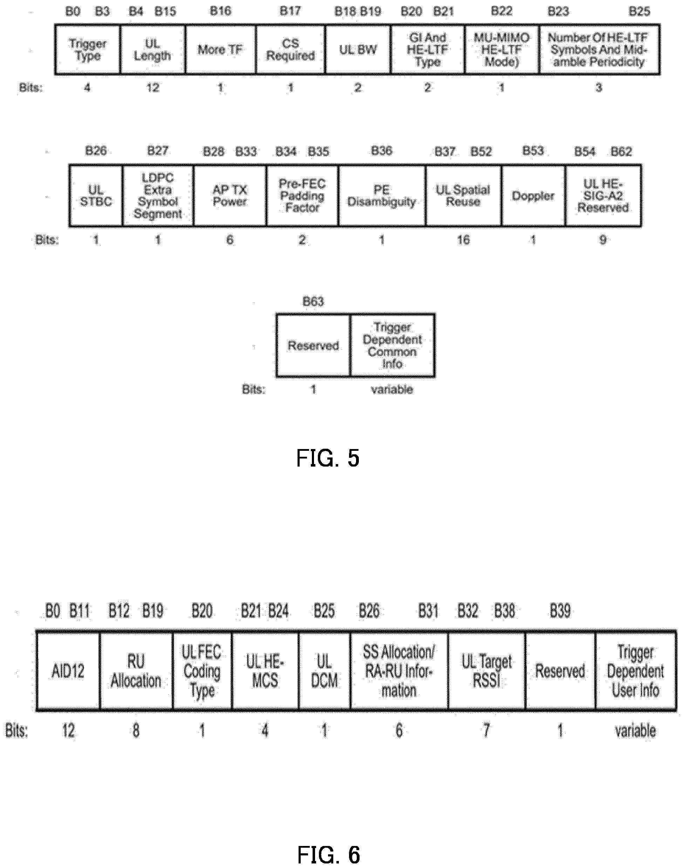

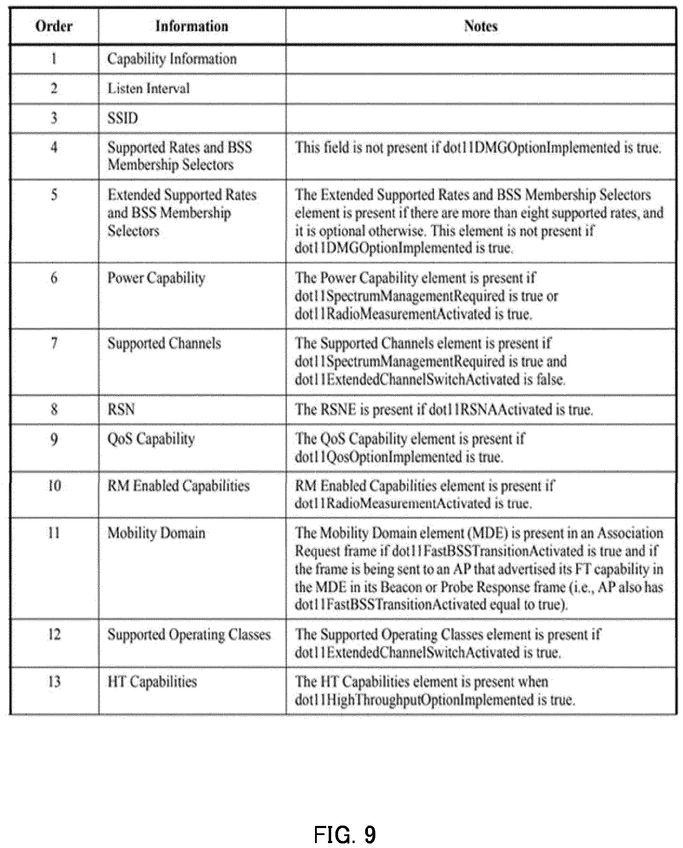

FIG. 5 illustrates an exemplary format of a Common info field. The format illustrated in FIG. 5 is similar to the format illustrated in Figure 9-64b of NPL 4, for example. FIG. 5 illustrates a plurality of subfields included in the Common info field format.

FIG. 6 illustrates an exemplary format of a User info field. The format illustrated in FIG. 6 is similar to the format illustrated in Figure 9-64d of NPL 4, for example. FIG. 6 illustrates a plurality of subfields included in the User info field format.

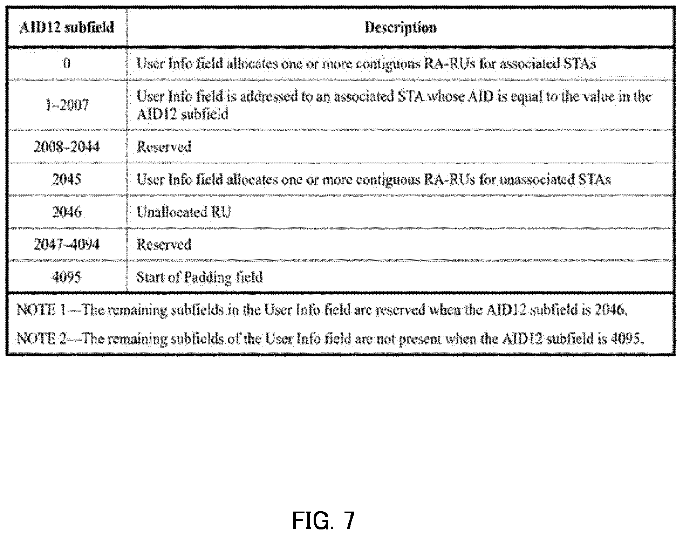

Values included in the subfield illustrated as "AID12" (hereinafter simply referred to as "AID12") in FIG. 6 will be described. FIG. 7 is a table illustrating exemplary values of AID12. The table illustrated in FIG. 7 is similar to Table 9-31g of NPL 4, for example.

AID (association identifier) 12 includes a STA identifier (a number for individually indicating a STA). In the example of FIG. 7, the range of identifiers that can be assigned to STAs is 1-2007.

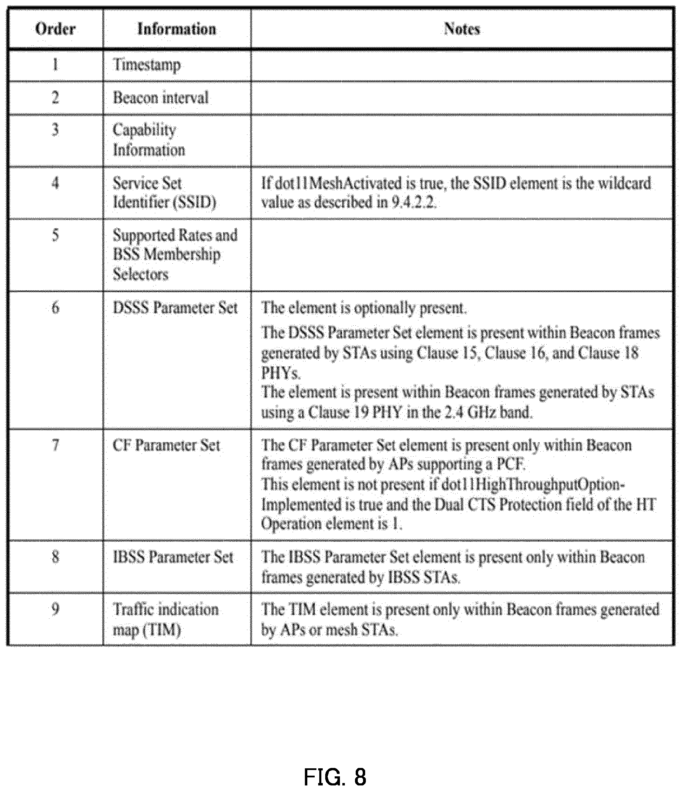

FIG. 8 illustrates exemplary information elements of a beacon. The information elements illustrated in FIG. 8 are excerpts from Table 9-27 of NPL 5, for example.

FIG. 9 illustrates exemplary information elements of an association request. The information elements illustrated in FIG. 9 are excerpts from Table 9-29 of NPL 5, for example.

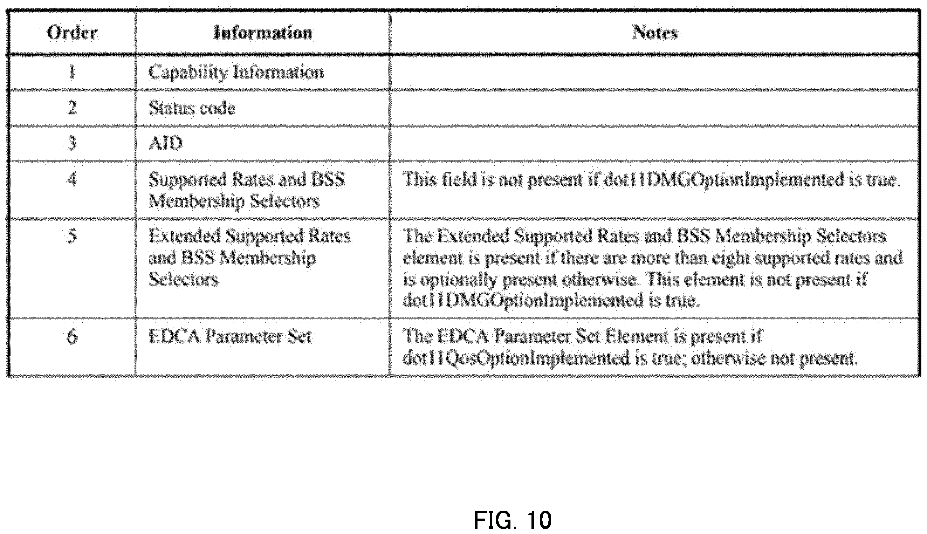

FIG. 10 illustrates exemplary information elements of an association response. The information elements illustrated in FIG. 10 are excerpts from Table 9-30 of NPL 5, for example.

The beacon in FIG. 8, the association request in FIG. 9, and the association response in FIG. 10 each include Capability Information, namely an information element.

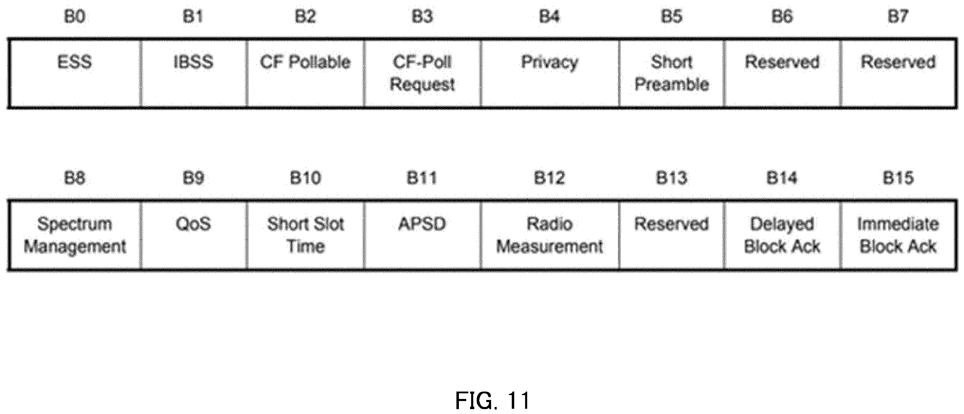

FIG. 11 illustrates an exemplary format of Capability Information. The format illustrated in FIG. 11 is similar to the format illustrated in Figure 9-68 of NPL 5, for example.

As illustrated in FIG. 7, the range of AID that can be specified as STA identifiers, and AID12 is 1-2007. The range is limited to 2ⁿ to 2007 when multi-BSSID is supported. Regarding the range, n=log₂K, where K is the maximum possible number of BSSIDs (see NPL 5, Section 9.4.2.6).

A basic service set (BSS) is formed of an AP and a plurality of STAs. An operation in which a STA connects to an AP within a BSS is called "associate (association)."

BSS colors (6-bit value) is used to distinguish neighboring APs (see NPL 4, Section 26.17.3).

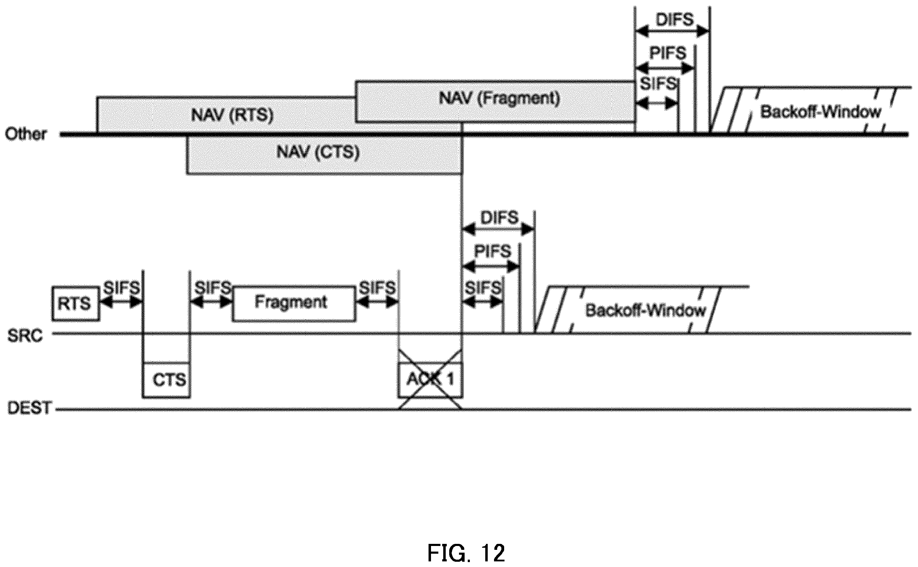

FIG. 12 illustrates an exemplary operation of Request to Send/Clear to Send (RTS/CTS). FIG. 12 illustrates an exemplary operation similar to that in Figure 10-7 of NPL 5. A STA that receives RTS and is specified as a recipient transmits CTS. For specifying a plurality of recipients, MU-RTS is used in place of RTS.

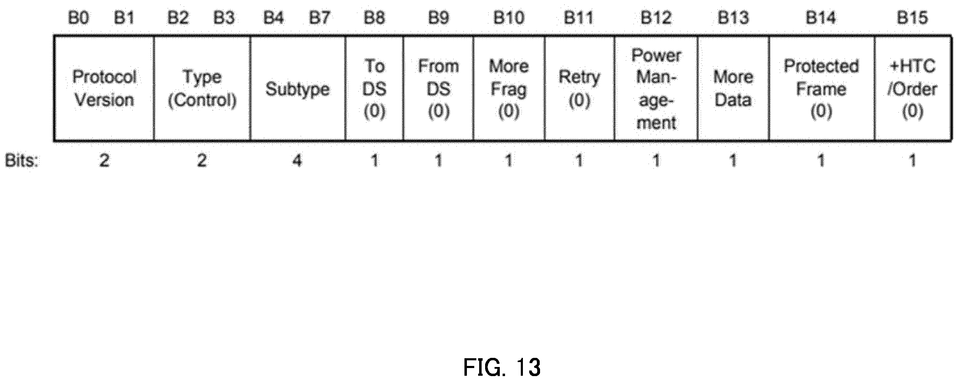

FIG. 13 illustrates an exemplary format of the frame control field of a control frame including RTS/CTS.

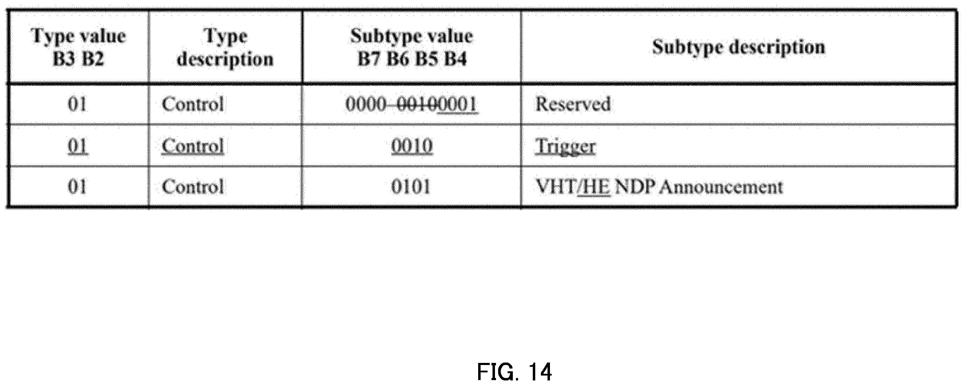

FIG. 14 illustrates exemplary types of MAC frame including RTS/CTS. FIG. 14 illustrates the changed content of the values changed in 11ax. The content in FIG. 14 is the content in Table 9-1 of NPL 4.

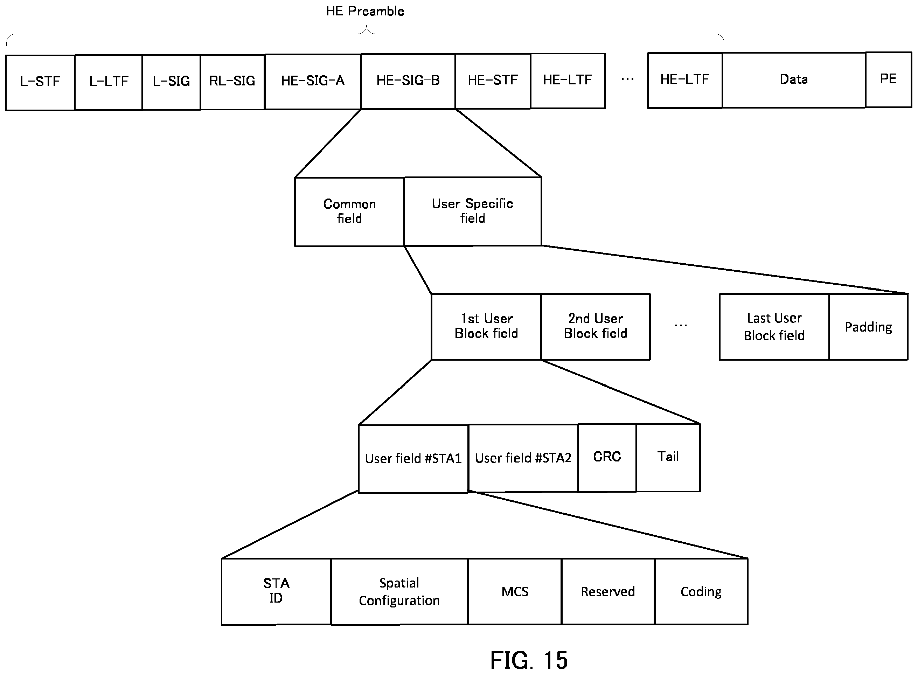

FIG. 15 illustrates an exemplary format of MU-PPDU frame in 11ax. FIG. 15 illustrates the format illustrated in NPL 4.

In FIG. 15, the destination is indicated by STAID in the User field. For example, AID12 illustrated in FIG. 7 is used as the STAID.

A radio communication apparatus (for example, AP) specifies the identifier of a radio communication apparatus (for example, AP or STA) in each frame as described above, so that information can be transmitted and received smoothly between the radio communication apparatuses.

An exemplary procedure in which a STA, a component of a BSS, associates with an AP will be described. (1) A STA detects an AP by receiving a beacon. (2) The STA transmits an association request to the AP. (3) The AP receives the association request and transmits an association response to the STA. For example, when the BSS of AP1 is referred to as BSS_1, a STA associated with AP1 is a component of BSS_1, and a STA not associated with AP1 is not a component of BSS_1.

As the identifier of the associated STA, AID (information element of Order 3 in FIG. 10) included in the association response or AID12 (see FIG. 7, AID is assigned in the range of 1-2007) is used. On the other hand, as the identifier of the STA, which is not a component of BSS_1 of AP1 (that is, the STA is not associated with AP1), the use of a MAC address (48 bits) is discussed. A MAC address may be used as an identifier for an AP (for example, AP2) that is not a component of BSS_1.

When an AP indicates a radio communication apparatus that is not a component of the BSS of this AP as described above, the size of the identifier increases, thereby increasing overhead.

One non-limiting and exemplary embodiment of the present disclosure provides a radio communication apparatus and a radio communication method that allow an AP to indicate a radio communication apparatus (examples thereof including STAs and APs) which is not a component of the BSS of this AP with a small amount of information.

Overhead can be reduced by reducing the amount of information required to indicate a STA (or an AP), which is not a component of the BSS of this AP.

### Configuration of Radio Communication System

A radio communication system according to an embodiment of the present disclosure includes at least two source APs and one STA. In the following description, for example, "radio communication apparatus" corresponds to AP.

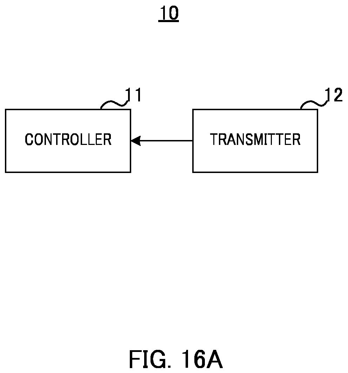

FIG. 16A is a block diagram illustrating an exemplary configuration of part of radio communication apparatus 10. Radio communication apparatus 10 illustrated in FIG. 16A includes controller 11 and transmitter 12.

Controller 11 assigns an identifier to a radio communication apparatus, which is not included in the basic service set to which radio communication apparatus 10 belongs. Transmitter 12 transmits a signal including the identifier.

In the following, an example will be described in which at least two APs perform LTL-DL communication to a plurality of STAs in coordination.

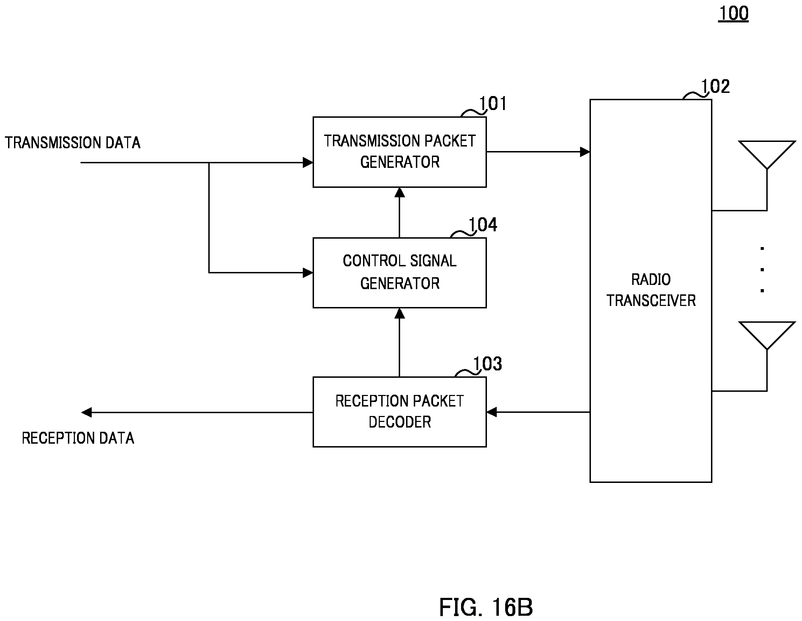

FIG. 16B is a block diagram illustrating an exemplary radio communication apparatus according to the present embodiment. Radio communication apparatus 100 illustrated in FIG. 16B corresponds to, for example, an AP or a STA. Radio communication apparatus 100 includes transmission packet generator 101, radio transceiver 102, reception packet decoder 103, and control signal generator 104.

Transmission packet generator 101 generates a transmission packet from transmission data from a data processor in a higher layer and/or from data (for example, control information) generated by control signal generator 104, and outputs the generated packet to radio transceiver 102.

Radio transceiver 102 converts the transmission packet into a radio transmission signal and transmits the radio transmission signal via an antenna.

Radio transceiver 102 receives a radio reception signal, converts the radio reception signal into a reception packet, and outputs the reception packet to reception packet decoder 103.

Reception packet decoder 103 decodes the reception packet and outputs the reception data to a data processor (not illustrated) in a higher layer. Alternatively, reception packet decoder 103 decodes the reception packet and outputs the control information to control signal generator 104.

Control signal generator 104 generates control information based on at least one of the transmission data, the control information output from reception packet decoder 103, and an internal state, and outputs the generated control information to transmission packet generator 101. For example, control signal generator 104 generates control information regarding triggers, associations, and data communication.

### Example 1

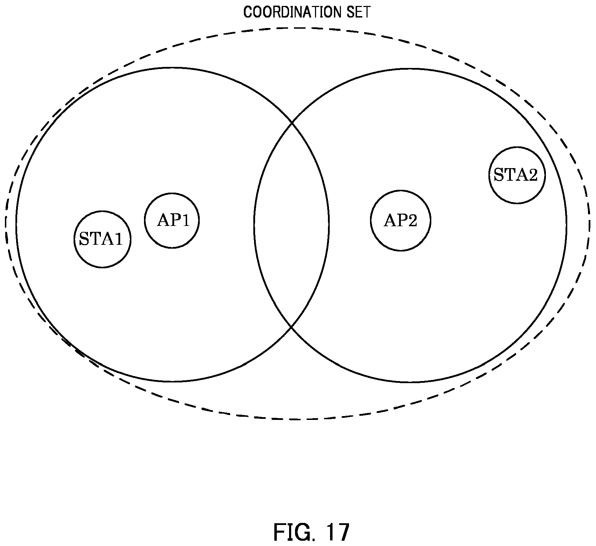

In the following, an exemplary coordination by LTL-DL communication based on NPL 3 will be described. FIG. 17 illustrates an exemplary UL-DL communication coordinated by the C-SR scheme.

FIG. 17 illustrates a set (referred to as a coordination set) including AP1, AP2, STA1, and STA2. STA1 is located within the coverage area of AP1 and is associated with AP1. STA2 is located within the coverage area of AP2 and is associated with AP2. In FIG. 17, LTL communication from STA1 to AP1 and DL communication from AP2 to STA2 are coordinated by the C-SR scheme.

AP1 is an AP (hereinafter referred to as "master AP") disposed in a coordination set and controls the coordination set. AP2 is an AP (hereinafter referred to as "slave AP") disposed in the coordination set and controlled by a master AP. In addition, AP1 is located at a position free from interference from AP2.

STA1 is located within the coverage area of AP1 and can be associated with AP1. STA2 is located within the coverage area of AP2 and can be associated with AP2. In addition, STA2 is located at a position free from interference from STA1.

At the initialization of the coordination set, AP1 notifies AP2 of the identity assigned to AP2 and the identity of AP1. Hereinafter, the AP identifier is referred to as AP_ID. The maximum value of AP_ID may be the maximum number of APs installed in the coordination set (maximum AP number). For example, AP_ID is a value represented by several bits (for example, 4 bits).

When a slave AP other than AP2 is disposed, AP1 may notify AP2 of the AP_ID of the other AP. A backhaul between AP1 and AP2, or any other method may be used for the notification from AP1 to AP2.

An example in which AP1 indicates AP_ID at the initialization has been described; however, AP1 may indicate AP_ID after the initialization. For example, when a slave AP (for example, AP3) is additionally disposed after the initialization, AP1 may indicate AP_ID in the same manner as described above. In this case, within the coordination set, AP1 may notifies AP2 of AP_ID of AP3, and/or AP1 may notifies AP3 of AP_ID of AP2.

After initializing the coordination set and after STA1 associates with AP1 and STA2 associates with AP2, UL-DL communication is performed in the coordination set.

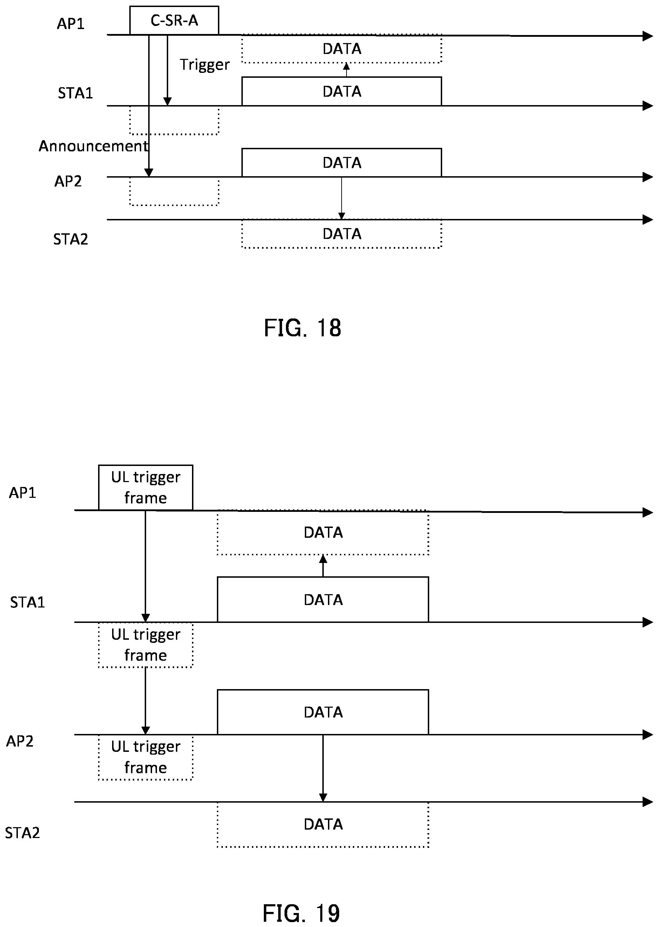

FIG. 18 illustrates an exemplary sequence of a UL-DL communication in the coordination set illustrated in FIG. 17.

In FIG. 18, C-SR-A (C-SR Announcement) is a packet in which "Trigger" to be transmitted from AP1 to STA1 and "Announcement" to be transmitted from AP1 to AP2 are combined. "Trigger" includes information indicating the start of LTL communication from STA1 to AP1. "Announcement" includes information indicating the start of DL communication from AP2 to STA2.

For "Trigger," for example, the UL trigger frame illustrated in FIGS. 5 and 6 may be used. In this case, the identifier of the trigger destination of "Trigger" may be AID12 indicating STA1.

The information indicated by "Announcement" includes information specifying AP2 as the destination (trigger destination). AP_ID may be used as the information specifying AP2.

STA1 that has received "Trigger" performs LTL communication to transmit data to AP1, and AP2 that has received "Announcement" performs DL communication to transmit data to STA3.

Using AP_ID to specify the trigger destination included in "Announcement" in this way can reduce the amount of information (for example, the number of bits) used to specify the AP, thereby reducing overhead. For example, using AP_ID can reduce the number of bits from 48 bits to 4 bits compared to using MAC addresses.

### Supplement

In the above example, AP_ID is used; however, another identifier may be used in place of the AP_ID. For example, AP1 may use Short IDs for an identifier of STA (and/or AP) which is not a component of the BSS of AP1. This configuration allows AP1 to specify a STA, which is not a component of the BSS of AP1, as a trigger destination.

In addition, the Short ID target may be limited to a STA and/or an AP within a coordination set, or may be limited to coordinated STAs and/or APs.

In the above example, AP_ID is used to specify the trigger destination in the C-SR coordination scheme; however, AP_ID and/or Short ID may be used in coordination schemes other than the C-SR coordination scheme. Alternatively, AP_ID and/or Short ID may be used other than for specifying the trigger destination.

In the above example, a master AP (AP1) transmits C-SR-A; however, a slave AP (AP2) may transmit C-SR-A. Furthermore, the control of the coordination set may be performed by another master AP (i.e., an apparatus other than A1 and A2). In this case, each of APs, including AP1 and AP2, in the coordination set may be a slave AP.

In addition, Short ID or AP_ID may be included in AID and/or AID12. This configuration allows AP1 to use AID and/or AID 12 illustrated in FIG. 7 to specify a STA (or an AP), which is not a component of the BSS of AP1. Short ID or AP_ID may be assigned to 1 to m of AID and/or AID12, or may be assigned to 2ⁿ to 2ⁿ+m. Herein, m may be the maximum value of Short ID or AID. Furthermore, part of the unused areas of AID 12 (for example, 2008-2044 and 2047-4094 (see FIG. 7)) may be assigned to Short ID or AP_ID. Alternatively, a value of Short ID or AP_ID may be assigned so as to correspond to another AID12 value. For example, when AP_ID values of 0 to n are assigned to slave APs, AID12 values of 2008 to 2008+n may be assigned to those slave APs.

A master AP may centrally handle STAs (and slave APs) in the coordination set and give AID and/or AID12. For example, some of the values of 1 to 2007 to be assigned to non-AP STAs associated with APs are given to slave APs, and these values are not given to the non-AP STAs. A predetermined range among 1 to 2007 (for example, 2000 to 2006) may be reserved as values for slave APs, thereby not assigning these values to non-AP STAs.

In AID and/or AID12, a BSS color may be used for specifying an AP. Forexample, part of the unused areas of AID12, "2008-2044" and "2047-2094," may be allocated to the BSS color. Alternatively, "2045" and "2046" already assigned in AID12 may be changed to "2073" and "2074," and the area of "2008" to "2072" may be assigned to the BSS color.

When AP_ID is included in AID12, the trigger indicating the start of LTL-DL communication may be changed. FIG. 19 illustrates a variation of the sequence illustrated in FIG. 18. In FIG. 19, C-SR-A in FIG. 18 is replaced by a UL trigger frame.

For example, the UL trigger frame may be used as a trigger indicating the start of UL-DL communication, and it is possible not to use (or not to transmit) the Announcement for indicating the start of DL communication. In this case, a User Info field for specifying DL communication may be added to the UL trigger frame, and the AP that is the transmission source of DL communication may be specified by AID12 of the added User Info field. This configuration does not need Announcement indicating the start of DL communication, thereby reducing overhead.

In addition, when the trigger indicating the start of LTL-DL communication is changed to the UL trigger frame, some usages of the User Info field for specifying APs may be changed.

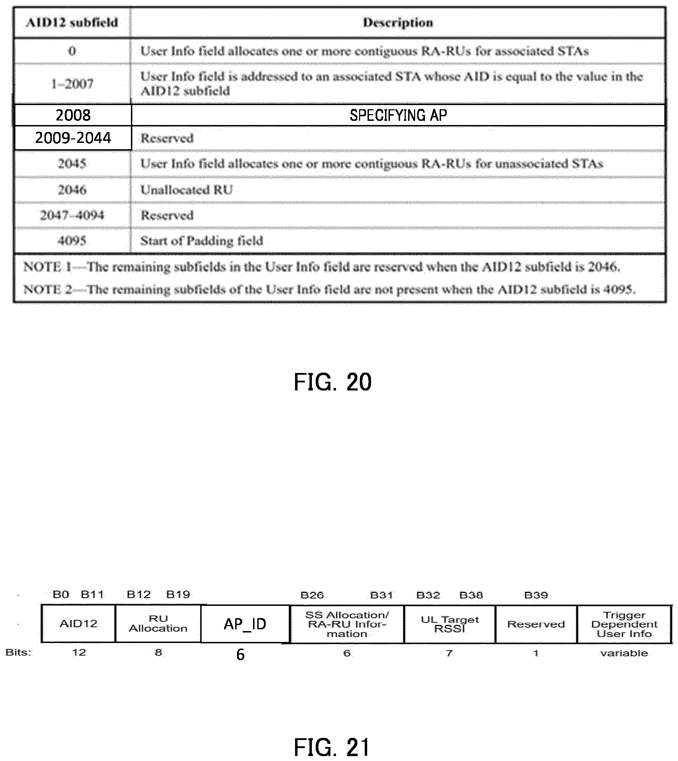

FIG. 20 illustrates another exemplary AID12. FIG. 21 illustrates an exemplary User Info field based on FIG. 20. As illustrated in FIG. 20, for example, one of the unused areas of AID12 (for example, "2008") may be used to specify an AP. When AID12 specifies an AP (for example, with "2008"), the User Info field illustrated in FIG. 21 may be used. In the User Info field illustrated in FIG. 21, the usage of a specific area of the User Info field illustrated in FIG. 6 is changed to the usage of setting information (for example, AP_ID) for indicating the AP. For example, the specific area whose usage is changed may be the following: a total 6-bit area of the "UL FEC Coding Type," "UL HE-MCS," and "UL DCM" fields; some of the 6-bit area; or an area including an additional area other than the 6-bit area. A BSS color may be used in place of AP_ID as the information for indicating an AP.

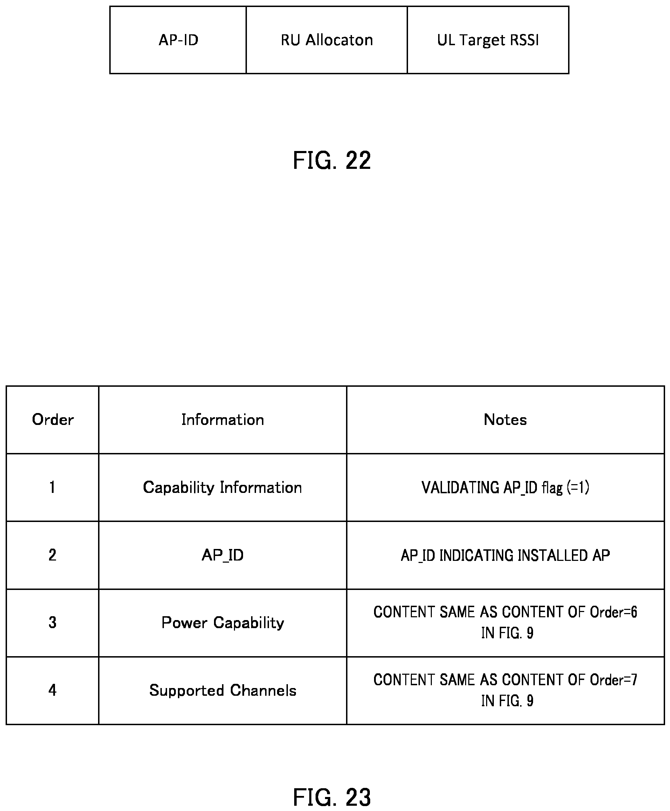

A trigger with AP specification added may be used in place of the UL trigger frame. For example, a format to which the number of APs is added may be defined in the common info field in FIG. 5. Then, the AP may be indicated by a new User Info field for the AP. FIG. 22 illustrates an exemplary new User Info field for the AP.

In the example in FIG. 22, AP_ID indicates an AP; however, a BSS color may be used for indicating the AP in place of the AP_ID. In place of adding the number of APs to the Common info field, a flag indicating whether or not there is a User Info field following the User Info field for AP may be added.

In addition, "Trigger" and "Announcement" may be combined by using a multiplexing method such as OFDMA or MU-MIMO, or using A-MPDU. Alternatively, "Trigger" and "Announcement" may be separate PPDUs or packets. In place of AP_ID included in information notified in "Announcement," AID including AP_ID, AID12, or a BSS color may be used.

For example, when "Trigger" and "Announcement" are combined by OFDMA or MU-MIMO and transmitted by MU-PPDU, STA ID (see FIG. 15) in a User field indicating the resource including "Trigger" may be set to a specific value such as "0" (the number indicating the associated STA in FIG. 7), and STA ID in a User field indicating the resource including "Announcement" may be set to another specific value such as "2045" (the number indicating the unassociated STA (or an AP) in FIG. 7). A resource including a "Trigger" may be, for example, at least one of the following: a resource on the frequency axis (which may be referred to as a resource unit) and a spatial resource of MU-MIMO.

One of the unused areas of AID12 (for example, "2047") may be defined for a number indicating an AP or an AP within a coordination set. In this case, for example, setting the STA ID that indicates the destination of the Announcement in the MU-PPDU to "2047" allows nearby unassociated STAs to avoid the reception operation, thereby reducing the power consumption of the STAs.

One of the unused areas of AID12 (for example, "2048") may be defined for a number indicating an AP_ID unassigned AP or an AP not included in the coordination set. This configuration allows access to the AP_ID unassigned AP or the AP not included in the coordination set.

The transmission power ofAP2 may be calculated from "AP TX Power" and "UL Target RSSI" included in a trigger (for example, the UL trigger frame illustrated in FIGS. 5 and 6). In this case, "LTL Target RSSI" may specify a value at which the interference from AP2 to AP1 is equal to or less than the allowable value.

In the transmission by AP2, beamforming that a null is directed to AP1 may be performed.

### Example 2

The above Example 1 shows an exemplary operation in which a master AP specifies AP_ID. Example 2 below shows an exemplary operation in which a coordination set is autonomously built and AP_ID is specified.

An AP (hereinafter referred to as "installed AP") supporting coordinated communication validates a flag (hereinafter referred to as "AP_ID flag") included in a beacon or probe response (the flag indicates whether the coordinated communication is supported or not). For the AP_ID flag, for example, Reserve (for example, B6) of Capability Information illustrated in FIG. 11 may be used.

When a newly installed AP (hereinafter referred to as "added AP") receives a beacon or a probe response from an installed AP at startup or after startup and the AP_ID flag is valid, the added AP transmits an AP association request (namely, association request for the AP) to the installed AP. FIG. 23 illustrates exemplary information elements of the AP association request.

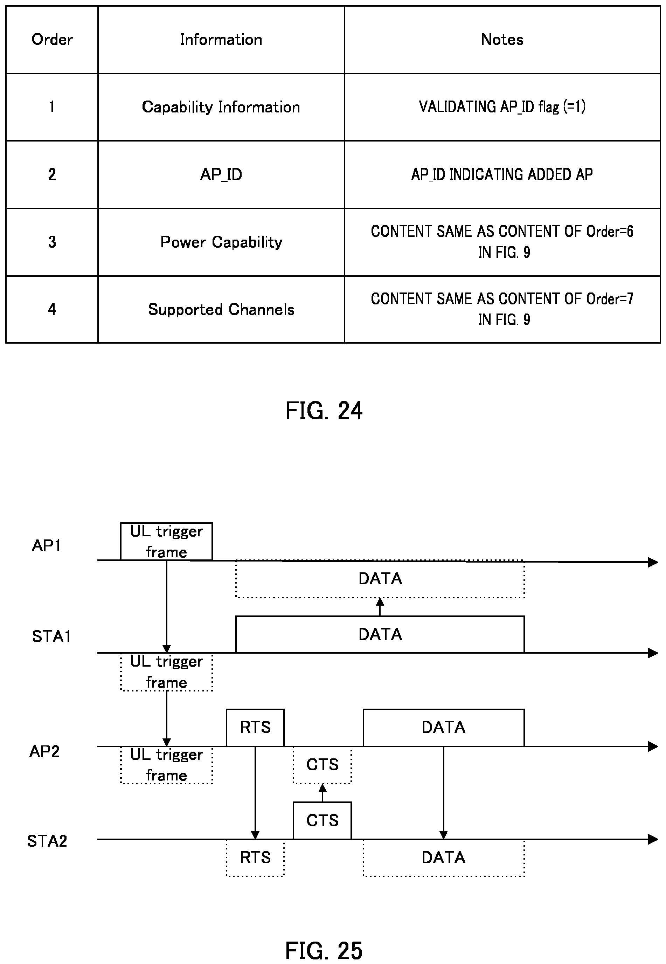

The installed AP that has received the AP association request transmits an AP association response (namely, association response for the AP) to the added AP. FIG. 24 illustrates exemplary information elements of the AP association response.

The installed AP may transmit a reassignment request to the added AP when the AP_ID indicating the installed AP specified in the AP association request has already been assigned to another AP.

Alternatively, the installed AP may add, to the AP association response, information regarding whether AP_ID can be assigned or not when the AP_ID indicating the installed AP specified in the AP association request has already been assigned to another AP.

In addition, in this case, the installed AP may include, in the reassignment request or the AP association response, assignable AP_ID candidate information. In addition, in this case, the installed AP may include, in the AP association response, the AP_ID of another AP (hereinafter referred to as "registered AP_ID") specified in the past association or the like.

In the above example, the AP_ID flag is added to the AP association request and to the AP association response to distinguish from the association request in FIG. 9 and the association response in FIG. 10; however, the present disclosure is not limited thereto. For example, the distinction may be made by using a determination method other than the AP_ID flag. In this case, the Capability Information may remain as it is, or the Capability Information may be removed from the components. Furthermore, the AP association request may be formed as information elements including AP_ID in the association request illustrated in FIG. 9.

In this manner, establishing an association between the added AP and the installed AP allows the APs to mutually specify the AP_ID of the other AP.

### Supplement

A beacon may be used to specify AP_ID. For example, AP1, namely the installed AP, may include AP_ID of AP1 and/or registered AP_ID in the beacon. This configuration does not need the AP_ID (an information element of the AP association request) for the installed AP.

In this case, AP2, namely the added AP, may set AP_ID that does not overlap the registered AP_ID included in the beacon as the AP_ID of AP2, and add the AP_ID of AP2 to the information elements of the AP association request. This configuration does not need the AP_ID (an information element of the AP association response) for the added AP.

The above Example 1 shows an exemplary operation in which a beacon or probe response includes the AP_ID flag; however, the AP_ID flag is not necessarily be included in a beacon or probe response. In this case, the added AP may transmit an AP association request upon receiving a beacon. The installed AP may refuse association with the added AP when the added AP that transmits the association request does not support the coordinated communication. Alternatively, the installed AP may refuse association with the added AP that transmits the association request when the installed AP does not support the coordinated communication.

The above Example 1 shows an exemplary operation in which an installed AP or an added AP specifies AP_ID; however, a master AP may specify the AP_ID. In this case, the installed AP may serve as the master AP, or the installed AP may indicate the notification from the master AP.

For the operation of the association between the installed AP and the added AP (between APs), specifying of AP_ID may be added to the operation similar to the association between a STA and an AP (between AP and STA). For example, a procedure of authentication and/or key exchange performed in the association between an AP and a STA may be performed between the APs. This configuration allows transmission of data between the APs, and secure communication can be performed efficiently.

The AP_ID indicated by the association request, association response, or beacon may be AID including the AP_ID shown in Example 1 or AID 12.

For performing association between the APs, the Multiple BSSID function may be used to define a BSS dedicated to the association between the APs. In this case, the value of a specific AID area is defined as the AID area for the AP, and each AP participating in the BSS may assign a value other than the AID area for the AP to the AID for the STA. The IDs of the coordination AP and affiliated STAs can be centrally managed in the same AID space.

An ID may be defined for communication destined for a plurality of coordination APs. For example, when one of the nontransmitted BSSIDs in Multiple BSSIDs serves as a BSSID dedicated to the coordination APs, the AID value corresponding to all dedicated BSSIDs of the coordination APs can be used as an ID for communication destined for the plurality of coordination APs.

An ID that indicates random access similar to UL OFDMA-based random access (UORA) of 1 1ax may be defined in the communication between the APs. That is, a special value among AP_ID and/or AID for APs may be defined for random access. For example, for defining a BSS dedicated to the association between the coordination APs, the following is possible: a buffer status request trigger frame (BSRP Trigger frame) is transmitted with set AID=0 to request information on buffered data for coordinated communication from any AP; or an existing AP transmits a trigger frame with set AID=2045 so that an AP before association can transmit an association request.

The association between APs is not limited to the usage of coordinated communication between a plurality of APs, and may be used when a plurality of APs perform communication other than the coordinated communication. For example, the association between APs may be used when a plurality of APs are coordinated to perform functions other than communication, such as ranging, location detection, or sensing.

### Example3

Example 3 describes the operation of determining whether or not DL communication is possible after trigger transmission, in the UL-DL communication coordinated by the C-SR scheme as in Example 1. The configuration of the LTL-DL communication is substantially the same as in Example 1.

FIG. 25 illustrates an exemplary sequence for UL-DL communication in Example 3. In FIG. 25, transmission of a LTL trigger frame and UL communication (transmission and reception of UL data) between AP1 and STA1 may be the same as in Example 1. In FIG. 25, AP2 having received the UL trigger frame transmits RTS to STA2, the recipient. When STA2 successfully receives RTS (that is, when the influence of interference due to data transmission and reception at AP1 is small), STA2 transmits CTS to AP2. The case in which STA2 successfully receives RTS may be the following: interference from another nearby radio apparatus to STA2 (for example, interference to STA2 due to data transmission and reception to AP1) has small impact on RTS reception. Then, when AP2 receives the CTS, AP2 determines that DL communication is possible, and performs data transmission (DL communication) to STA2.

The above example describes transmission of RTS; however, MU-RTS may be used when there are a plurality of candidates for the DL destination of AP2.

Determining whether or not DL communication is possible by using CTS can stop unnecessary signal transmission (for example, DL transmission while interference is too large for a recipient STA to receive the signal).

### Example 4

Example 3 describes a method for determining whether or not DL communication is possible by using RTS/CTS. Example 4 describes an example using a frame in place of the RTS/CTS used in Example 3. The following describes a method for measuring the amount of interference by using an exemplary frame referred to as a RTS+mes and/or an exemplary frame referred to as CTS+mes frame (which may be collectively referred to as RTS+mes/CTS+mes frames in the following).

In Example 4, transmission of a UL trigger frame and UL communication may be the same operations as in Example 1. AP2 having received the UL trigger frame transmits RTS+mes to STA2, the recipient. When STA2 successfully receives RTS+mes, STA2 measures the received power in the same frequency band as RTS+mes. The received power in the same frequency band as RTS+mes may correspond to interference power due to the data transmission of AP1. Then, STA2 transmits CTS+mes in which information regarding the received power is added to CTS.

Using the RTS+mes/CTS+mes frames in this manner allows a STA having received the CTS+mes to indicate the interference amount measured by the STA to a source, and the source to transmit data with appropriately selected MCS in view of the interference, thereby improving the throughput.

### Supplement

The format of RTS+mes may be the same as the RTS format, or may be a format in which information in the frequency band (also referred to as "tone") measured by using CTS+mes is added to the RTS format. By adding the frequency band information, the frequency band measured by using CTS+mes can be specified.

For specifying the type of RTS+mes and/or CTS+mes, the free area of the MAC frame type illustrated in FIG. 14 may be used. For example, RTS+mes is "010000" and CTS+mes is "010001." Alternatively, in the format of RTS and/or CTS frame, the usage of one of the specific bits in the the frame control field illustrated in FIG. 13 may be changed to the usage for indicating RTS+mes/CTS+mes. For example, the specific bit whose usage is changed may be any one of "To DS," "From DS," "More Frag," "Retry," "Protected Frame," and "+HTC/Order" illustrated in FIG. 13. For example, when the frame format serves as RTS+mes and/or CTS+mes, the usage change may be indicated by setting the corresponding bit (for example, "To DS") to 1.

### Example 5

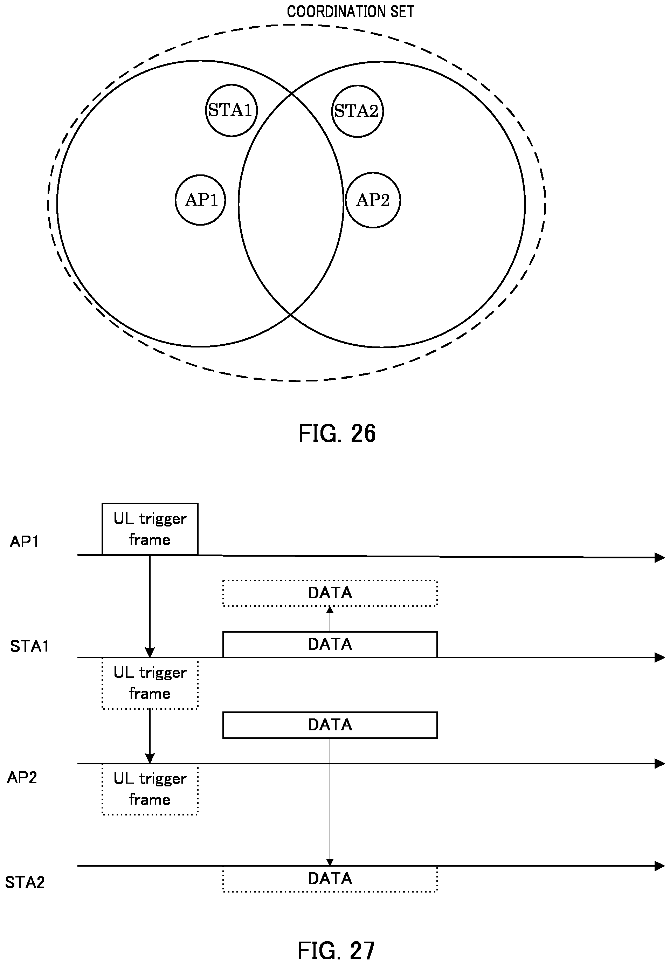

The above Example 1 shows an exemplary UL-DL communication coordinated by the C-SR scheme; however, the present disclosure is not limited thereto. FIG. 26 illustrates another exemplary disposition of UL-DL communication. For example, when apparatuses in the coordination set are disposed in such a way that STA2 is affected by interference from STA1 as illustrated in FIG. 26, UL communication (LTL data transmission) from STA1 to AP1 and DL communication (DL data transmission) from AP2 to STA2 may be UL-DL communication coordinated by a C-OFDMA coordination scheme.

FIG. 27 illustrates a sequence for UL-DL communication in the C-OFDMA coordination scheme. The operation illustrated in FIG. 27 is substantially the same as the operation by the C-SR coordination scheme illustrated in Example 1 (for example, FIG. 19). Except that, different frequency bands are respectively set for the following types of communication specified by the UL trigger frame: UL communication from STA1 to AP1 and DL communication from AP2 to STA2. FIG. 27 illustrates an example in which "UL trigger frame" is used; however, the "Trigger" and "Announcement" may be used as in FIG. 18. In this case, different frequency bands are respectively set for the following types of communication specified by the "Trigger" and the "Announcement": UL communication from STA1 to AP1 and DL communication from AP2 to STA2.

In this way, the communication in the C-OFDMA coordination scheme can be supported in the operation the same as in UL-DL communication coordinated by the C-SR scheme by setting different frequency bands for the frequency bands to be used for LTL communication and DL communication.

In FIG. 27, AP2 may determine to use C-OFDMA when the frequency band assigned to DL communication does not overlap the frequency band assigned to UL communication. In addition, AP2 may determine to use C-SR when the frequency band assigned to DL communication overlaps the frequency band assigned to LTL communication. When AP2 determines to use the C-SR, AP2 may perform the operation described in Example 3 or 4.

The above-described embodiment describes an example in which a plurality of APs perform coordinated communication to a STA; however, the present disclosure is not limited thereto. For example, part of the plurality of APs may be replaced with STA(s). For example, the present disclosure may be applied to a case where one or more APs and one or more STAs perform the coordinated communication to another STA. Alternatively, the present disclosure may be applied to a case where two or more STAs perform the coordinated communication to another STA.

The term representing any signal (packet) in the above embodiments is merely an example, and the present disclosure is not limited thereto.

Any component termed with "processor" or with a suffix, such as "-er," "-or," or "-ar" in the above-described embodiment may be "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A radio communication apparatus according to an embodiment of the present disclosure is a first radio communication apparatus and includes: a controller, which, in operation, assigns an identifier to a second radio communication apparatus not included in a basic service set to which the first radio communication apparatus belongs; and a transmitter, which, in operation, transmits a signal including the identifier.

In an embodiment of the present disclosure, the controller includes, in an association identification field in a user information field of the signal, the identifier.

In an embodiment of the present disclosure, the controller assigns the identifier to a reserved value of the association identification field.

In an embodiment of the present disclosure, the controller assigns the identifier to the second radio communication apparatus performing at least one of uplink communication and downlink communication in coordination with the first radio communication apparatus.

In an embodiment of the present disclosure, the first radio communication apparatus is a master access point that controls the second radio communication apparatus.

In an embodiment of the present disclosure, the controller includes, in the signal, the identifier, the signal being an association request.

In an embodiment of the present disclosure, the controller sets, to the identifier, a destination specified in the user information field of the signal, the signal being a trigger frame.

In an embodiment of the present disclosure, the controller sets, in the user information field of the signal, information indicating that a destination is an access point, the signal being a trigger frame; and set the identifier in an information field for a non-access point in the user information field.

A radio communication apparatus according to an embodiment of the present disclosure is a first radio communication apparatus and includes: a transmitter, which, in operation, transmits a second control signal after transmitting a first control signal to a second radio communication apparatus; and a controller, which, in operation, determines whether or not downlink transmission to the second radio communication apparatus is possible in a coordination scheme of spatial reuse, based on a response to the second control signal.

In an embodiment of the present disclosure, the response includes information regarding an interference amount determined based on the second control signal received by the second radio communication apparatus.

A radio communication method according to an embodiment of the present disclosure includes: assigning, by a first radio communication apparatus, an identifier to a second radio communication apparatus not included in a basic service set to which the first radio communication apparatus belongs; and transmitting, by the first radio communication apparatus, a signal including the identifier.

A radio communication apparatus according to an embodiment of the present disclosure is a first radio communication apparatus and includes: a receiver, which, in operation, receives, from a second radio communication apparatus, a signal including an identifier of the first radio communication apparatus not included in a basic service set to which the second radio communication apparatus belongs.

A radio communication method according to an embodiment of the present disclosure includes: receiving, from a second radio communication apparatus by a first radio communication apparatus, a signal including an identifier of the first radio communication apparatus not included in a basic service set to which the second radio communication apparatus belongs.

This application is entitled to and claims the benefit of Japanese Patent Application No. 2020-133229 filed on August 5, 2020, the disclosure of which including the specification, drawings and abstract is incorporated herein by reference in its entirety.

### Industrial Applicability

The exemplary embodiment of the present disclosure is particularly advantageous for mobile communication systems.

### Reference Signs List

10, 100 Radio communication apparatus
11 Controller
12 Transmitter
101 Transmission packet generator
102 Radio transceiver
103 Reception packet decoder
104 Control signal generator

## Claims

1. A radio communication apparatus that is a first radio communication apparatus, the radio communication apparatus comprising:
a controller, which, in operation, assigns an identifier to a second radio communication apparatus not included in a basic service set to which the first radio communication apparatus belongs; and
a transmitter, which, in operation, transmits a signal including the identifier.

2. The radio communication apparatus according to claim 1, wherein the controller includes, in an association identification field in a user information field of the signal, the identifier.

3. The radio communication apparatus according to claim 2, wherein the controller assigns the identifier to a reserved value of the association identification field.

4. The radio communication apparatus according to claim 1, wherein the controller assigns the identifier to the second radio communication apparatus performing at least one of uplink communication and downlink communication in coordination with the first radio communication apparatus.

5. The radio communication apparatus according to claim 4, wherein the first radio communication apparatus is a master access point that controls the second radio communication apparatus.

6. The radio communication apparatus according to claim 4, wherein the controller includes, in the signal, the identifier, the signal being an association request.

7. The radio communication apparatus according to claim 1, wherein the controller sets, to the identifier, a destination specified in the user information field of the signal, the signal being a trigger frame.

8. The radio communication apparatus according to claim 1, wherein the controller sets, in the user information field of the signal, information indicating that a destination is an access point, the signal being a trigger frame; and the controller sets the identifier in an information field in the user information field, the information field being for a non-access point.

9. A radio communication apparatus that is a first radio communication apparatus, the radio communication apparatus comprising:
a transmitter, which, in operation, transmits a first control signal to a second radio communication apparatus, and then transmits a second control signal; and
a controller, which, in operation, determines whether or not downlink transmission to the second radio communication apparatus is possible in a coordination scheme of spatial reuse, based on a response to the second control signal.

10. The radio communication apparatus according to claim 9, wherein the response includes information regarding an interference amount determined based on the second control signal received by the second radio communication apparatus.

11. A radio communication method, comprising:
assigning, by a first radio communication apparatus, an identifier to a second radio communication apparatus not included in a basic service set to which the first radio communication apparatus belongs; and
transmitting, by the first radio communication apparatus, a signal including the identifier.

12. A radio communication apparatus that is a first radio communication apparatus, the radio communication apparatus comprising:
a receiver, which, in operation, receives, from a second radio communication apparatus, a signal including an identifier of the first radio communication apparatus not included in a basic service set to which the second radio communication apparatus belongs.

13. A radio communication method, comprising:
receiving, by a first radio communication apparatus, from a second radio communication apparatus, a signal including an identifier of the first radio communication apparatus not included in a basic service set to which the second radio communication apparatus belongs.
